**Europäisches Patentamt**

**European Patent Office**

**Office européen des brevets**

(19)

(11) Veröffentlichungsnummer: **0 118 672**
**B1**

(12) # EUROPÄISCHE PATENTSCHRIFT

(45) Veröffentlichungstag der Patentschrift:
**15.10.86**

(21) Anmeldenummer: **84100464.1**

(22) Anmeldetag: **18.01.84**

(51) Int. Cl.⁴: **B 29 C 47/92, B 29 C 47/10**

(54) **Verfahren und Vorrichtung zum Konstanthalten der Wandstärke beim Extrudieren von Blasfolien, Rohren oder rohrförmigen Strängen aus Kunststoff.**

(30) Priorität: **12.02.83 DE 3304865**

(43) Veröffentlichungstag der Anmeldung:
**19.09.84 Patentblatt 84/38**

(45) Bekanntmachung des Hinweises auf die Patenterteilung:
**15.10.86 Patentblatt 86/42**

(84) Benannte Vertragsstaaten:
**AT BE CH DE FR GB IT LI LU NL SE**

(56) Entgegenhaltungen:
**AT-B-361 219**
**DE-A-2 223 609**
**DE-A-2 542 331**
**DE-B-1 298 726**
**DE-C-1 964 386**
**US-A-3 864 625**
**US-A-4 152 380**

(73) Patentinhaber: **Battenfeld Extrusionstechnik GmbH, Königstrasse 45, D-4970 Bad Oeynhausen (DE)**

(72) Erfinder: **Schwab, Erwin, Dr. Ing., Auf den Breien 16, D-5882 Meinerzhagen (DE)**
Erfinder: **Parisi, Graziano, Königshagen 5, D-4970 Bad Oeynhausen 7 (DE)**
Erfinder: **Pander, Peter, Leostrasse 84, D-4000 Düsseldorf 11 (DE)**

(74) Vertreter: **Müller, Gerd, Hammerstrasse 2, D-5900 Siegen 1 (DE)**

EP 0 118 672 B1

## Beschreibung

Die Erfindung betrifft ein Verfahren und eine Vorrichtung zum Konstanthalten der Wandstärke beim Extrudieren von Blasfolien, Rohren oder rohrförmigen Strängen aus Kunststoff, bei welchem bzw. welcher die Menge des Kunststoffgranulats vor dem Extruder in einem Meßzylinder mittels einer elektrische Impulse abgebenden Niveauschranke innerhalb vorgegebener Grenzwerte geregelt und dabei der zeitliche Abstand der Impulse mit einer aus der Abzuggeschwindigkeit und dem Gewicht des Kunststoffstranges pro Längeneinheit rechnerisch gebildeten Sollwertzeit verglichen wird, und bei welchem ein hieraus resultierendes Signal zur Regelung der Granulatzuführung an den Meßzylinder benutzt und ständig als Regelaufschaltung dem Extruder und/oder dem Strangabzug aufgegeben wird.

Durch die DE-C-19 64 386 ist bereits eine Vorrichtung zur Durchführung dieses gattungsgemäßen Verfahrens bekannt. Mit ihrer Hilfe kann die Extrusions- bzw. Abzugsgeschwindigkeit für den Kunststoffstrang so beeinflußt werden, daß dessen Wandstärke innerhalb vorgeschriebener Grenzen konstant gehalten wird. Die Arbeitsweise der bekannten Vorrichtung basiert dabei auf der Tatsache, daß der meßtechnisch erfaßte Extrudereinzug mit dem Extruderausstoß zeitlich linear zusammenhängt. Mit der hierdurch erreichten Regelung läßt sich dabei gegenüber den üblicherweise eingesetzten, ungeregelten Vorrichtungen auch eine erhebliche Ersparnis im Verbrauch des Kunststoffmaterials erreichen.

Die praktische Erfahrung hat gezeigt, daß beim Einsatz der bekannten Vorrichtung über den jeweiligen Querschnitt des extrudierten Kunststoffstranges hinweg mit guter Näherung die rechnerisch vorgegebene, mittlere Wandstärke erhalten werden kann. Die absolute Wandstärke des extrudierten Kunststoffstranges kann jedoch gegenüber der rechnerisch vorgegebenen, mittleren Wandstärke innerhalb einer gewissen Bandbreite nach oben und nach unten abweichen, so daß die Brauchbarkeit des Kunststoffstranges, insbesondere wenn er zur Bildung von Vorformlingen für das Blasformen benutzt werden soll, nachhaltig beeinträchtigt wird. Trotz Einhaltung des einer bestimmten mittleren Wanddicke entsprechenden Metergewichtes am extrudierten Kunststoffstrang kann also mit der bekannten Vorrichtung nicht sichergestellt werden, daß dessen absolute Wandstärke an allen Stellen seines Querschnitts der rechnerisch vorgegebenen mittleren Wandstärke entspricht.

Der Erfindung liegt die Aufgabe zugrunde, ein Verfahren zum Konstanthalten der Wandstärke beim Extrudieren von Blasfolien, Rohren oder rohrförmigen Strängen aus Kunststoff der gattungsgemäßen Art anzugeben, sowie eine Vorrichtung zur Durchführung dieses Verfahrens zu schaffen, mittels dessen bzw. durch welche eine Regelung erreicht wird, mit der aus der rechnerisch vorgegebenen, mittleren Wandstärke eine absolute, minimale Wandstärke gewährleistet wird.

Die Lösung dieser Aufgabe wird erfindungsgemäß verfahrenstechnisch nach dem Kennzeichen des Anspruchs 1 dadurch erreicht, daß hinter dem Extruder am extrudierten Kunststoffstrang eine Wandstärkenmessung mit einer entlang dem Kunststoffstrang quer zur Abzugsrichtung verlaufenden Bewegungskomponente durchgeführt und dabei die über die volle Laufstrecke der Bewegung anfallenden Meßwerte zu einem Mittelwert integriert werden und daß daraufhin dieser Mittelwert mit einem aus der Messung vor dem Extruder rechnerisch gebildeten Soll-Mittelwert für die Wandstärke verglichen sowie auf diesen nachgeführt wird, bevor dann mit dem korrigierten bzw. geeichten Mittelwert fortwährend direkte Wandstärkenmessungen am Kunststoffstrang ausgeführt und die hieraus resultierenden Ist-Werte für die Regelaufschaltung benutzt werden.

Der besondere Vorteil dieser Verfahrensart liegt darin, daß die Regelung über eine vor dem Extruder rechnerisch erfaßte, mittlere Wandstärke und eine hinter dem Extruder meßtechnisch ermittelte, mittlere Wandstärke im Sinne einer Angleichung der letzteren an die erstere stattfindet. Auf diese Weise findet nämlich eine Eichung des hinter dem Extruder wirkenden Wandstärkenmeßsystems statt, dergestalt, daß dieses im Anschluß an die zunächst nur relativ erfaßte Wandstärke absolute Meßwerte liefert, über die der Extruder auf minimale Wandstärke geregelt wird.

Durch die US-A-4 152 380, die DE-A-2 542 331 und die US-A-3 864 625 ist es zwar bekannt, hinter einem Extruder am extrudierten Kunststoffstrang eine quer zur Abzugsrichtung bewegliche Wandstärkenmessung vorzunehmen und danach die Abzugsgeschwindigkeit zu regeln. Zur Regelung der Granulatzuführung zum Extruder sind diese Wandstärkenmessungen jedoch nicht vorgesehen und sie werden auch nicht mit einem Korrektur- oder Eichverfahren vor der eigentlichen fortlaufenden Wandstärkenmessung betrieben.

Nach der Erfindung ist gemäß Anspruch 2 vorgesehen, daß die Wandstärke berührungslos, insbesondere mit Ultraschall, z.B. reflektoskopisch, gemessen wird.

Erfindungsgemäß erfolgt nach Anspruch 3 die Wandstärkenmessung ausschließlich zur Mittelwertbildung mit quer zur Abzugsrichtung des Kunststoffstranges über dessen gesamte Querschnittsbreite verlaufender Bewegungskomponente. Als besonders vorteilhaft hat es sich jedoch bewährt, wenn erfindungsgemäß nach Anspruch 4 die Wandstärkenmessung mit ständig quer zur Abzugsrichtung des Kunststoffstranges stattfindender Bewegungskomponente durchgeführt wird. Hierbei kann nach Anspruch 5 die Wandstärkenmessung kontinuierlich und in gleichbleibender Bewegungsrichtung durchgeführt werden.

Für das Extrudieren von Rohren oder rohrförmigen Strängen aus Kunststoff ist es dabei besonders zweckmäßig, wenn nach dem Vorschlag des Anspruchs 6 die Wandstärkenmessung in einer den Kunststoffstrang umgreifenden Bewegung durchgeführt wird.

Nach der Erfindung kann es sich in manchen Fällen auch als wichtig erweisen, daß gemäß Anspruch 7 die Wandstärkenmessung zur Mittelwertbildung längs einer Schraubenlinie durchgeführt und dabei deren Steigung zur Abzugsgeschwindigkeit des Kunststoffstranges proportional eingestellt wird. Es läßt sich hierdurch sicherstellen, daß die aus der Wandstärkenmessung resultierende Mittelwertbildung sich auf eine quer zur Abzugsrichtung des Kunststoffstranges gerichtete Meßebene bezieht.

Bei der Herstellung von Blasfolien ist es erfindungsgemäß nach Anspruch 8 möglich, daß die Wandstärkenmessung in hinund hergehender Bewegung durchgeführt wird.

Eine Vorrichung zur Durchführung des Verfahrens arbeitet mit einem Meßzylinder für das Kunststoffgranulat vor dem Extruder, dem eine elektrische Impulse abgebende Niveauschranke zugeordnet ist. Von einem Rechner wird aus der Abzugsgeschwindigkeit und dem Gewicht des Kunststoffstranges pro Längeneinheit eine Soll-Wertzeit ermittelt, die mit einer durch den zeitlichen Abstand der Impulse der Niveauschranke bestimmten Ist-Wertzeit verglichen wird. Das aus dem Sollwert-Istwert-Vergleich resultierende Signal wird zur Regelung der Granulatzuführung an den Meßzylinder verwendet. Nach Anspruch 9 zeichnet sich diese Vorrichtung dabei erfindungsgemäß besonders dadurch aus, daß dem Spritzkopf des Extruders ein Wandstärkenmeßgerat entlang dem Kunststoffstrang quer beweglich nachgeordnet ist, das einen Stellantrieb aufweist sowie über eine Vergleichsstufe mit einem die Sollwertzeit bestimmenden Rechner in Steuer- und Nachstellverbindung steht.

In weiterer Ausgestaltung der Erfindung kann nach Anspruch 10 das Wandstärkenmeßgerät für eine den Kunststoffstrang auf einer Querschnittsebene umgreifende Bewegung angeordnet und/oder ausgebildet werden. Nach Anspruch 11 ist dabei auch die Möglichkeit gegeben, daß der Umlaufbewegung des Wandstärkenmeßgerätes ausschließlich während des ersten Umlaufs noch eine der Abzugsgeschwindigkeit des Kunststoffstranges proportionale axiale Bewegungskomponente überlagerbar ist.

Für die Herstellung von Blasfolien kann gemäß Anspruch 12 das Wandstärkenmeßgerät für eine auf die jeweilige Breite des Kunststoffstranges einstellbare Hin- und Herbewegung eingerichtet sein. Auch hier ist es nach Anspruch 13 denkbar, daß ausschließlich der ersten Hin- und/oder Herbewegung des Wandstärkenmeßgerätes eine der Abzugsgeschwindigkeit des Kunststoffstranges proportionale, axiale Bewegungskomponente überlagerbar ist.

Schließlich wird nach Anspruch 14 ein Erfindungsmerkmal auch noch darin gesehen, daß das Wandstärkenmeßgerät aus einem Ultraschall-Meßgerät, insbesondere einem Impulsecho-Meßgerät bzw. Reflektoskop, besteht.

Weitere Einzelheiten und Vorteile der Erfindung ergeben sich aus der nachfolgenden Beschreibung von in der Zeichnung dargestellten Beispielen. Es zeigt

Figur 1 in schematisch vereinfachter Darstellung einen Extruder mit zugehörigem Meß-Dosiersystem,

Figur 2 ein Blockschaltbild des Meß-Dosiersystems in Zuordnung zum Extruder,

Figur 3 ein Funktionsschaubild des Meß-Dosiersystems,

Figur 4 die Arbeitsweise eines Wandstärken-Meßgerätes im Zusammenwirken mit einem rohrförmigen Kunststoffstrang sowohl während der relativen Meßwerterfassung als auch bei der Abtastung absoluter Meßwerte und

Figur 5 in schematisch vereinfachter Seitenansicht eine Variante der Arbeitsweise des Wandstärkenmeßgerätes während des Zeitraumes der relativen Meßwerterfassung.

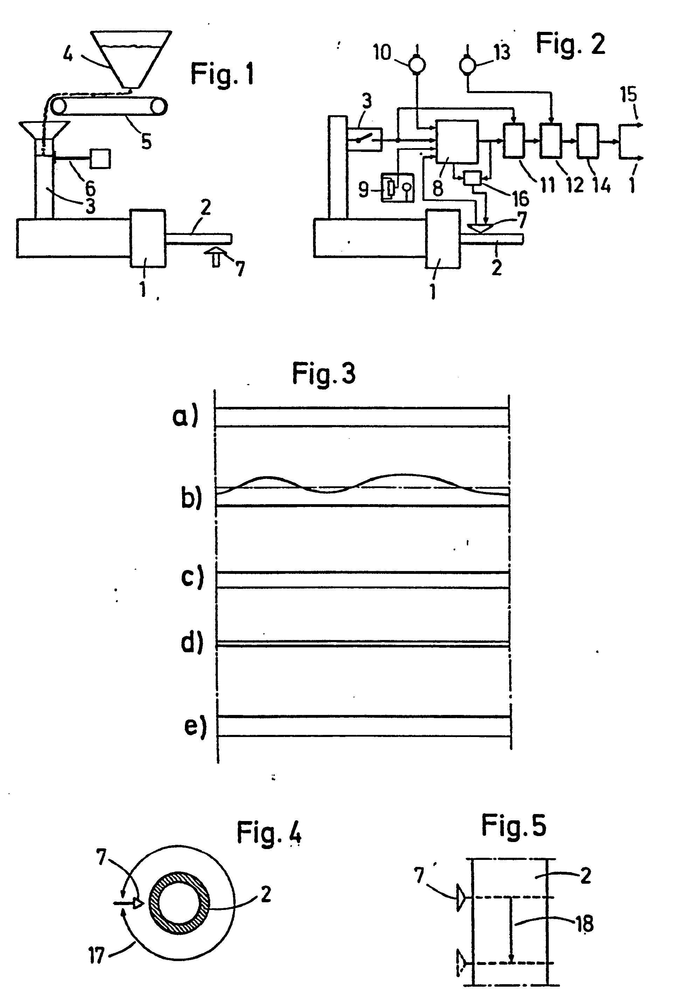

In Fig. 1 ist ein Extruder 1 angedeutet, mit dessen Hilfe bspw. Rohre 2, rohrförmige Stränge oder auch Blasfolien aus Kunststoff hergestellt werden können, wie sie beispielsweise in Blasformmaschinen weiterverarbeitet werden.

Der Materialeinzug des Extruders 1 wird von einem angebauten Meßzylinder 3 mit Kunststoffgranulat gespeist, der wiederum aus einem Vorratsbehälter 4, bspw. unter Vermittlung einer Bandwaage 5 dosiert mit dem Kunststoffgranulat beschickt werden kann. Die Steuerung der Bandwaage 5 und damit die Mengendosierung des Kunststoffgranulates in den Meßzylinder 3 wird durch die dem Meßzylinder 3 zugeordnete Niveauschranke 6 bewirkt.

Die Niveauschranke 6 regelt den Spiegel des Kunststoffgranulates im Meßzylinder 3 zwischen zwei Grenzwerten. Dabei wird durch den Abstand der von der Niveauschranke 6 gelieferten Impulse eine Istwertzeit festgelegt, die dem Quotienten aus dem an der Bandwaage 5 eingestellten Gewicht und dem Ausstoß des Extruders 1 proportional ist. Die Betätigung und gegebenenfalls die Laufgeschwindigkeit der Bandwaage 5 wird dabei von der Niveauschranke 6 geregelt.

Dem Spritzkopf des Extruders 1 ist ein berührungslos arbeitendes Wandstärkenmeßgerät 7 nachgeordnet, das bspw. als Ultraschall-Meßgerät ausgelegt ist, welches vorzugsweise nach dem Impulsecho-Prinzip bzw. als Reflektoskop arbeitet und zusammen mit dem Meßzylinder 3, der Bandwaage 5 und der Niveauschranke 6 ein Meß-Dosiersystem für den Extruder 1 bildet.

Als weitere Komponenten weist das Meß-Dosiersystem gemäß dem Blockschaltbild nach Fig. 2 noch einen Rechner 8 auf, der als Funktion der Einstellung des Stranggewichtes pro Längeneinheit und der Abzugsgeschwindigkeit eine Sollwertzeit bildet.

Zur Einstellung des Stranggewichtes pro Längeneinheit dient ein Stellglied 9, bspw. ein Potentiometer, während die Abzugsgeschwindigkeit von einem Tachogenerator 10 ermittelt wird.

Die von der Niveauschranke 6 eingegrenzte Istwertzeit und die vom Rechner 8 gebildete Sollwertzeit gelangen über eine Zeitstufe 11 in eine Auswertstufe 12, in die wiederum von einem Tachogenerator 13 aus Spannung geführt wird, welcher mit der Extruderschnecke gekoppelt ist und damit eine der Schneckendrehzahl proportionale Spannung liefert.

Die Differenz der Sollwert und Istwertzeit wird von der Auswertstufe 12 in einen Zeitspannungswandler 14 gegeben, dessen Ausgangsgröße als Regelaufschaltung zum Extruderabzug 15 und zum Extruder 1 geführt wird.

Das dem Spritzkopf des Extruders 1 nachgeordnete Wandstärkenmeßgerät 7 dient zunächst nach Inbetriebsetzung des Extruders 1, also bei beginnendem Austritt des Kunststoffrohres 2 bzw. des rohrförmigen Stranges oder einer Blasfolie aus dem Spritzkopf der Messung der Wandstärkenverteilung über die gesamte Querschnittsstrecke hinweg.

Dieser Querschnittsstrecke entspricht dabei an einem Rohr 2 oder an einem rohrförmigen Strang der volle Umfang, während sie bei einer Blasfolie von deren Breite bestimmt ist.

Jeweils die erste über die gesamte Querschnittsstrecke durchgeführte Messung des Wandstärkenmeßgerätes 7 entspricht dabei einer die Wandstärkenverteilung ermittelnden Probemessung. Sämtliche dabei anfallenden Meßwerte werden in den Rechner 8 gegeben, der wiederum durch Integration aus allen diesen Meßwerten einen Mittelwert bildet. Dieser Mittelwert wird dann aus dem Rechner 8 in eine Vergleichsstufe 16 gegeben, der auch die Sollwertzeit aufgeschaltet ist, die aus dem Rechner 8 auf die Zeitstufe 11 geht und als Funktion der Einstellung des Rohrgewichtes pro Längeneinheit sowie der Abzugsgeschwindigkeit gebildet ist. Die Ausgangsgröße der Vergleichsstufe 16 wird sodann benutzt, um das Wandstärkenmeßgerät 7 in Richtung auf die Sollwertzeit zu korrigieren, dieses also selbsttätig zu eichen.

In Fig. 3 ist rein schematisch die Funktionsweise des Wandstärkenmeßgerätes 7 während des Eichvorgangs aufgezeigt. Der bei a) zwischen den beiden parallelen Linien eingegrenzte Bereich entspricht der durch den Sollwert-Ausgang des Rechners 8 vorgegebenen, mittleren Wandstärke des Rohres 2, die dieses über seine gesamte Querschnittsstrecke - also den Umfang - hinweg erhalten soll.

Bei b) ist angedeutet, welche Wandstärkenverteilung das Rohr 2 über seine gesamte Querschnittsstrecke - den Umfanghinweg bei Beginn des Extrusionsvorganges tatsächlich aufweist und wie sie beim Probelauf des Wandstärkenmeßgeräte 7 ermittelt wurde. Bei c) ist der aus der Probemessung des Wandstärkenmeßgerätes 7 durch Integrieren gebildete Mittelwert der Wandstärke des Rohres 2 über dessen gesamte Querschnittsstrecke aufgetragen, während durch d) wiedergegeben ist, um welchen Wert das Wandstärkenmeßgerät 7 nachkorrigiert werden muß, um den bei e) aufgetragenen Eichwert zu erreichen, welcher wiederum dem Vorgabewert bei a) entspricht.

Beim Extrudieren von Rohren 2 oder rohrförmigen Strängen aus Kunststoff wird zu Beginn des Extrusionsvorganges das Wandstärkenmeßgerät 7 zunächst mit einer Umlaufbewegung um den gesamten Umfang des Rohres 2 herumgeführt, wie das durch den Pfeilring 17 angedeutet ist. Währenddessen werden dann sämtliche Meßwerte dem Rechner 8 zugeführt, welcher durch Integrieren für die Wandstärke des extrudierten Rohres einen Mittelwert bildet. Die Differenz zwischen diesem Mittelwert und dem vorgegebenen Sollwert für die mittlere Wandstärke bewirkt dann unmittelbar eine Korrektur des Wandstärkenmeßgerätes 7, bspw. dadurch, daß bei Benutzung eines Ultraschall-Meßgerätes dessen Sendefrequenz entsprechend verändert wird. Durch entsprechende Korrektur der Sendefrequenz des Ultraschall-Meßgerätes, welches vorzugsweise nach dem Impulsechoverfahren bzw. als Reflektoskop arbeitet, läßt sich erreichen, daß das Wandstärkenmeßgerät 7 selbsttätig und exakt auf die Wandstärke voreingestellt wird, die dem Vorgabewert entspricht. Damit ist dann das Wandstärkenmeßgerät 7 geeicht, um im weiteren Verlauf des Extrusionsvorganges fortwährend direkte Wandstärkenmessungen am Rohr auszuführen so wie die hieraus resultierenden Istwerte ständig als Regelaufschaltung dem Extruder 1 oder der Abzugsvorrichtung 15 zuzuführen. Da das geeichte Wanddickenmeßgerät 7 absolute Meßwerte liefert, kann der Extruder 1 bzw. die ihm zugeordnete Abzugsvorrichtung 15 für das Rohr 2 sicher.auf minimale Wandstärke für das Rohr 2 ausgeregelt werden.

Das Wandstärkenmeßgerät 7 kann beim Extrudieren von Rohren 2 oder rohrförmigen Strängen aus Kunststoff mittels einer geeigneten Antriebsvorrichtung ständig und mit konstanter Geschwindigkeit auf einer Kreisbahn auf dessen Umfang herumgeführt werden, wobei die Kreisbahn auf einer zur Abzugsrichtung normalen Ebene liegt. Dabei tastet das Wandstärkenmeßgerät 7 das Rohr 2 ständig längs einer Schraubenlinie ab, d. h. die ermittelten Meßwerte beziehen sich nicht auf eine bestimmte Querschnittsebene im Rohr, sondern sie werden über eine durch die Abzugsgeschwindigkeit des Rohres 2 bestimmte Rohrlänge verteilt ermittelt. Diese Arbeitsweise des Wandstärkenmeßgerätes 7 mag für die ständige Wandstärkenmessung während des Extrusionsbetriebes geeignet sein, gute Meßergebnisse erzielen. Für den Eichvorgang am Wandstärkenmeßgerät 7, also zu Beginn jedes Extrusionsvorganges, kann es sich jedoch in manchen Fällen als wichtig erweisen, daß das Wandstärkenmeßgerät 7 zum Zwecke der von ihm bewirkten Mittelwertbildung das Rohr 2 exakt auf einer rechtwinklig zur Abzugsrichtung liegenden Querschnittsebene abtastet. Deshalb ist es zweckmäßig, die Antriebsvorrichtung für das Wandstärkenmeßgerät 7 so auszulegen, daß sie diesem außer einer Umlaufbewegung auch noch eine in Abzugsrichtung des Rohres 2 gerichtete Bewegungskomponente zu erteilen, die der Abzugsgeschwindigkeit des Rohres proportional ist und über eine Wegstrecke stattfindet, die das Rohr 2 während einer vollen Umlaufbewegung des Wandstärkenmeßgerätes 7 zurücklegt, wie das in Fig. 5 durch den Pfeil 18 angedeutet wird.

Bei der Herstellung von Blasfolien mittels des Extruders 1 arbeitet natürlich das Wandstärkenmeßgerät 7 nicht mit einer Umlaufbewegung, sondern es wird vielmehr so angeordnet und ausgebildet, daß es über die Breite der jeweiligen Blasfolie hinweg eine hin- und hergehende Abtastbewegung ausführt. Während des Eichvorgangs, also während des ersten Hin- und/oder Hergangs des Wandstärkenmeßgerätes 7 nach Einsetzen des Extrusionsbetriebes kann dabei auch hier der Querbewegung eine Bewegungskomponente überlagert werden, die in Abzugsrichtung der Blasfolie verläuft und der Abzugsgeschwindigkeit proportional ist. Auch wird dann nämlich sichergestellt, daß die Wandstärkenmessung an der Blasfolie exakt auf einer quer zur Abzugsrichtung verlaufenden Ebene stattfindet. Nach Abschluß des Eichvorganges kann dann das Wandstärkenmeßgerät 7 so hin- und herbewegt werden, daß es die Blasfolie längs einer Zickzacklinie fortschreitend abtastet.

**Patentansprüche**

1. Verfahren zum Konstanthalten der Wandstärke beim Extrudieren von Blasfolien, Rohren oder rohrförmigen Strängen aus Kunststoff, bei welchem die Menge des Kunststoffgranulats vor dem Extruder (1), in einem Meßzylinder (3) mittels einer elektrische Impulse abgebenden Niveauschranke (6) innerhalb vorgegebener Grenzwerte geregelt und dabei der zeitliche Abstand der Impulse mit einer aus der Abzugsgeschwindigkeit und dem Gewicht des Kunststoffstranges (2) pro Längeneinheit rechnerisch gebildeten Sollwertzeit verglichen wird, und bei welchem ein hieraus resultierendes Signal zur Regelung der Granulatzuführung an den Meßzylinder (3) benutzt und ständig als Regelaufschaltung dem Extruder und/oder dem Strangabzug aufgegeben wird, dadurch gekennzeichnet, daß hinter dem Extruder (1) am extrudierten Kunststoffstrang (2) eine Wandstärkenmessung (7) mit einer entlang dem Kunststoffstrang (2) quer zur Abzugsrichtung verlaufenden Bewegungskomponente (17) durchgeführt und dabei die über die volle Laufstrecke der Bewegung anfallenden Meßwerte zu einem Mittelwert integriert werden und daß daraufhin dieser Mittelwert mit einem aus der Messung vor dem Extruder (1) rechnerisch gebildeten Soll-Mittelwert für die Wandstärke verglichen (16) sowie auf diesen nachgeführt wird, bevor dann mit dem korrigierten bzw. geeichten Mittelwert fortwährend direkte Wandstärkenmessungen (7) am Kunststoffstrang (2) ausgeführt und die hieraus resultierenden Ist-Werte für die Regelaufschaltung benutzt werden.

2. Verfahren nach Anspruch 1, dadurch gekennzeichnet, daß die Wandstärke berührungslos, insbesondere mit Ultraschall, z. B. reflektoskopisch, gemessen wird.

3. Verfahren nach Ansprüche 1 und 2, dadurch gekennzeichnet, daß die Wandstärkenmessung (7) ausschließlich zur Mittelwertbildung (16) mit quer zur Abzugsrichtung des Kunststoffstranges (2) über dessen gesamte Querschnittsbreite verlaufender Bewegung (17) erfolgt.

4. Verfahren nach einem der Ansprüche 1 bis 3, dadurch gekennzeichnet, daß die Wandstärkenmessung (7) mit ständig quer zur Abzugsrichtung des Kunststoffstrangs (2) stattfindender Bewegungskomponente (17) durchgeführt wird.

5. Verfahren nach einem der Ansprüche 1 bis 4, dadurch gekennzeichnet, daß die Wandstärkenmessung (7) kontinuierlich und in gleichbleibender Bewegungsrichtung (17) durchgeführt wird.

6. Verfahren nach einem der Ansprüche 1 bis 5, dadurch gekennzeichnet, daß die Wandstärkenmessung (7) in einer den Kunststoffstrang (2) umkreisenden Bewegung (17) durchgeführt wird.

7. Verfahren nach einem der Ansprüche 1 bis 6, dadurch gekennzeichnet, daß die Wandstärkenmessung (7) zur Mittelwertbildung längs einer Schraubenlinie abgefahren wird, deren Steigung zur Abzugsgeschwindigkeit des Kunststoffstranges (2) proportional eingestellt wird.

8. Verfahren nach einem der Ansprüche 1 bis 3, dadurch gekennzeichnet, daß die Wandstärkenmessung (7) in hin- und hergehender Querbewegung durchgeführt wird.

9. Vorrichtung zur Durchführung des Verfahrens nach einem der Ansprüche 1 bis 8, bei welcher für das Kunststoffgranulat vor dem Extruder (1) ein mit einer elektrische Impulse abgebenden Niveauschranke (6) versehener Meßzylinder (3) angeordnet ist und bei welcher der eine einem Rechner (8) aus der Abzugsgeschwindigkeit und dem Gewicht des Kunststoffstranges (2) pro Längeneinheit ermittelte Soll-Wertzeit mit einer durch den zeitlichen Abstand der Impulse der Niveauschranke (6) bestimmten Ist-Wertzeit verglichen sowie das aus dem Sollwert-Istwert-Vergleich resultierende Signal zur Regelung der Granulatzuführung an den Meßzylinder (3) und als Regelaufschaltung für den Extruder und/oder Strangabzug verwendet wird,

dadurch gekennzeichnet, daß dem Spritzkopf des Extruders (1) ein Wandstärkenmeßgerät (7) entlang dem Kunststoffstrang (2) querbeweglich nachgeordnet ist, das einen Stellantrieb aufweist sowie über eine Vergleichsstufe (16) mit dem die Sollwertzeit bestimmenden Rechner (8) in Steuer- und Nachstellverbindung steht.

10. Vorrichtung nach Anspruch 9,
dadurch gekennzeichnet, daß das Wandstärkenmeßgerät (7) für eine den Kunststoffstrang (2) auf einer Querschnittsebene umkreisende Bewegung (17) angeordnet und/oder ausgebildet ist.

11. Vorrichtung nach einem der Ansprüche 9 oder 10,
dadurch gekennzeichnet, daß der Umlaufbewegung (17) des Wanddickenmeßgerätes (7) ausschließlich während des ersten Umlaufes eine der Abzugsgeschwindigkeit des Kunststoffstranges (2) proportionale, axiale Bewegungskomponente (18) überlagerbar ist (Fig. 5).

12. Vorrichtung nach Anspruch 9,
dadurch gekennzeichnet, daß das Wandstärkenmeßgerät (7) für eine auf die jeweilige Breite des Kunststoffstranges (2) einstellbare Hin- und Herbewegung eingerichtet ist.

13. Vorrichtung nach einem der Ansprüche 9 und 12,
dadurch gekennzeichnet, daß der Querbewegung des Wandstärkenmeßgerätes (7) ausschließlich während der ersten Hin- und/oder Herbewegung eine der Abzugsgeschwindigkeit des Kunststoffstranges (2) proportionale, axiale Bewegungskomponente überlagerbar ist.

14. Vorrichtung nach einem der Ansprüche 9 bis 13,
dadurch gekennzeichnet, daß als Wandstärkenmeßgerät (7) ein berührungslos, insbesondere mit Ultraschall arbeitendes Meßgerät, z. B. ein Impulsecho-Meßgerät bzw. ein Reflektoskop, vorgesehen ist.

**Claims**

1. Method for keeping the wall thickness constant during the extrusion of blow films, tubes or tubular strands of synthetic material, in which method the quantity of the synthetic material granulate is regulated within preset limit values in a measuring cylinder (3) before the extruder (1) by means of a level barrier (6) delivering electrical pulses and the time spacing of the pulses is then compared with a target value time formed by computation from the take-off speed and the weight of the synthetic material strand (2) per unit length and in which a signal resulting from this is utilised for the regulation of the granulate feed at the measuring cylinder (3), characterised thereby, that a wall thickness measurement (7) is performed at the extruded synthetic material strand (2) behind the extruder (1) with a movement component (17) extending transversely to the take-off direction along the synthetic material strand (2) and the measurement values then arising over the full distance traversed are integrated into a mean value and this mean value is thereupon compared (16) with a target mean value, which is formed by computation from the measurement before the extruder (1) for the wall thickness as well as made to follow this before direct wall thickness measurements (7) are then performed at the synthetic material strand (2) continually with the corrected or calibrated mean value and the actual values resulting herefrom are utilised for the regulating superimposition.

2. Method according to claim 1, characterised thereby, that the wall thickness is measured contactlessly, in particular by ultrasonics, for example reflectoscopically.

3. Method according to claims 1 and 2, characterised thereby, that the wall thickness measurement (7) takes place exclusively for the mean value formation (16) with a movement (17) extending transversely to the take-off direction of the synthetic material strand (2) over the entire cross-sectional width thereof.

4. Method according to one of the claims 1 to 3, characterised thereby, that the wall thickness measurement (7) is performed with a movement component (17) constantly taking place transversely to the take-off direction of the synthetic material strand (2).

5. Method according to one of the claims 1 to 4, characterised thereby, that the wall thickness measurement (7) is performed continuously and in a movement direction (17), which remains the same.

6. Method according to one of the claims 1 to 5, characterised thereby, that the wall thickness measurement (7) is performed in a movement (17) encircling the synthetic material strand (2).

7. Method according to one of the claims 1 to 6, characterised thereby, that the wall thickness measurement (7) for the mean value formation is moved along a helical line, the pitch of which is set to be proportional to the take-off speed of the synthetic material strand (2).

8. Method according to one of the claims 1 to 3, charactarised thereby, that the wall thickness measurement (7) is performed in a reciprocating transverse movement.

9. Device for the performance of the method according to one of the claims 1 to 8, in which a measuring cylinder (3), which is provided with a level barrier (6) delivering electrical pulses, is arranged for the synthetic material before the extruder (1) and in which the target value time determined by a computer (8) from the take-off speed and the weight of the synthetic material strand (2) per unit length is compared with an actual value time determined by the time spacing of the pulses of the level barrier (6) as well as the signal resulting from the comparison of target value and actual value is utilised for regulation of the granulate feed to the measuring cylinder (3) and as regulating superimposition for the extruder and/or strand take-off, characterised thereby, that a wall thickness measuring device (7) is arranged downstream of the injection head of the extruder (1), is transversely movable along the synthetic material strand (2), displays a setting drive as well as stands in controlling and tracking connection by way of a comparison stage (16) with the computer (8) determining the target value time.

10. Device according to claim 9, characterised thereby, that the wall thickness measuring device (7) is arranged and/or constructed for a movement (17) encircling the synthetic material strand (2) on a cross-sectional plane.

11. Device according to one of the claims 9 or 10, characterised thereby, that an axial movement component (18), which is proportional to the take-off speed of the synthetic material strand (2), is superimposable on the circulatory movement (17) of the wall thickness measuring device (7) exclusively during the first circulation.

12. Device according to claim 9, characterised thereby, that the wall thickness measuring device (7) is equipped for a reciprocatory movement settable to the respective width of the synthetic material strand (2).

13. Device according to one of the claims 9 and 12, characterised thereby, that an axial movement component, which is proportional to the take-off speed of the synthetic material strand (2), is superimposable on the transverse movement (17) of the wall thickness measuring device (7) exclusively during the first movement to and/or fro.

14. Device according to one of the claims 9 to 13, characterised thereby, that a measuring device, which operates contactlessly, in particular by ultrasonics, for example a pulse echo measuring device or a reflectoscope, is provided as wall thickness measuring device (7).

## Revendications

1. Procédé destiné à maintenir constant l'épaisseur de paroi lors de l'extrusion de feuilles soufflées, de tuyaux ou de corps tubulaires en matière synthétique, dans lequel on règle la quantité des granules de matière synthétique dans des limites prédéterminées en amont de l'extrudeuse (1), dans un cylindre de mesure (3), à l'aide d'une sonde de niveau (6) fournissant des impulsions électriques, et on compare l'écart temporel des impulsions avec un temps de consigne calculé à partir de la vitesse d'extraction et du poids par unité de longueur du corps tubulaire en matière synthétique (2) et dans lequel on utilise un signal qui en resulte pour la commande de l'alimentation des granules dans le cylindre de mesure (3) et on le fournit continuellement à l'extrudeuse et/ou à l'extraction du corps tubulaire, à titre de commande, caractérisé en ce qu'on effectue, en aval de l'extrudeuse (1), au corps tubulaire (2) extrudé en matière synthétique, une mesure de l'épaisseur de paroi (7) moyennant une composante de mouvement (17), s'étendant, le long du corps tubulaire en matière synthétique (2), transversalement à la direction d'extraction et en ce qu'on intègre les valeurs mesurées le long de tout le parcours du mouvement en une valeur moyenne et en ce qu'on compare (16) ensuite cette valeur moyenne avec une valeur moyenne de consigne de l'épaisseur de paroi calculée à partir de la mesure en amont de l'extrudeuse (1) et en ce qu'on l'approche de celle-ci avant d'effectuer ensuite continuellement des mesures directes d'épaisseur de paroi (7) du corps tubulaire (2) à l'aide de la valeur moyenne corrigée ou étalonnée et d'utiliser les valeurs réelles ainsi obtenues pour la commande.

2. Procédé selon la revendication 1 caractérisé en ce qu'on mesure l'épaisseur de paroi sans venir en contact avec celle-ci, notamment par ultra-sons, par exemple, par réflectoscopie.

3. Procédé selon les revendications 1 et 2 caractérisé en ce qu'on effectue la mesure de l'épaisseur de paroi (7) uniquement en vue de la formation d'une valeur moyenne (16) à l'aide d'un mouvement (17) s'étendant sur toute la largeur de sa section, transversalement par rapport à la direction d'extraction du corps tubulaire en matière synthétique (2).

4. Procédé selon l'une quelconque des revendications 1 à 3 caractérisé en ce qu'on effectue la mesure de l'épaisseur de paroi (7) moyennant une composante de mouvement (1) qui est continuellement orientée transversalement par rapport à la direction d'extraction du corps tubulaire en matière synthétique (2).

5. Procédé selon l'une quelconque des revendications 1 à 4 caractérisé en ce qu'on effectue la mesure de l'épaisseur de paroi (7) continuellement et selon une direction de mouvement (17) invariable.

6. Procédé selon l'une quelconque des revendications 1 à 5 caractérise en ce qu'on effectue la mesure de l'epaisseur de paroi (7) selon un mouvement (17) circulaire autour du corps tubulaire en matière synthétique (2).

7. Procédé selon l'une quelconque des revendications 1 à 6 caractérisé en ce qu'on effectue la mesure de l'épaisseur de paroi en vue de la détermination de la valeur moyenne selon une courbe hélicoïdale dont le pas est réglé proportionnellement à la vitesse d'extraction du corps tubulaire en matière synthétique (2).

8. Procédé selon l'une quelconque des revendications 1 à 3 caractérisé en ce qu'on effectue la mesure de l'épaisseur de paroi (7) selon un mouvement transversal de va-et-vient transversal.

9. Dispositif pour la mise en oeuvre du procédé selon l'une quelconque des revendications 1 à 8, comportant, en amont de l'extrudeuse (1), un cylindre de mesure (3) destiné aux granules de matière synthétique et équipé d'une sonde de niveau (6) fournissant des impulsions électriques, dispositif qui compare un temps de consigne déterminé par un calculateur (8), à partir de la vitesse d'extraction et du poids par unité de longueur du corps tubulaire en matière synthétique (2), avec une valeur de temps réelle déterminée par l'écart temporel entre les impulsions de la sonde de niveau (6) et qui utilise le signal résultant de la comparaison: valeur de consigne valeur réelle pour la commande de l'alimentation des granules dans le cylindre de mesure (3) et pour la commande de l'extrudeuse et/ou de l'extraction, caractérisé en ce que la tête de projection de l'extrudeuse (1) est munie d'un dispositif de mesure de l'épaisseur de paroi (7) qui peut se déplacer transversalement par rapport au corps tubulaire en matière synthétique (2) et qui comporte un servomoteur et est en liaison via un comparateur (16) avec le calculateur (8) qui détermine le temps de consigne, en vue de sa commande et de son réglage.

10. Dispositif selon la revendication 9 caractérisé en ce que le dispositif de mesure de l'épaisseur de paroi (7) est agence et constitué en vue d'un mouvement circulaire autour du corps tubulaire (2) en matière synthétique, dans un plan de section transversale.

11. Dispositif selon l'une quelconque des revendications 8 ou 10 caractérisé en ce qu'une composante de mouvement axial (18) proportionnelle à la vitesse d'extraction du corps tubulaire (2) en matière synthétique est superposable au mouvement circulaire (17) du dispositif de mesure d'épaisseur de paroi (7), uniquement lors du premier tour (figure 5).

12. Dispositif selon la revendication 9 caractérisé en ce que le dispositif de mesure d'épaisseur de paroi (7) est agencé en vue d'un mouvement de va-et-vient réglable en fonction de la largeur correspondante du corps tubulaire (2) en matière synthétique.

13. Dispositif selon l'une quelconque des revendications 9 et 12 caractérisé en ce qu'une composante de mouvement axiale, proportionnelle à la vitesse d'extraction du corps tubulaire (2) en matière synthétique est superposable au mouvement transversal du dispositif de mesure de l'épaisseur de paroi (7) uniquement lors du premier mouvement de va-et-vient.

14. Dispositif selon l'une quelconque des revendications 9 à 13 caractérisé en ce que, à titre de dispositif de mesure de l'épaisseur de paroi (7) est prévu un dispositif de mesure ne venant pas en contact avec la paroi, notamment un dispositif fonctionnant moyennant des ultrasons, par exemple un dispositif de mesure de l'écho d'une impulsion ou un réflectoscope.

0 118 672

Fig. 1

Fig. 2

Fig. 3

Fig. 4

Fig. 5